(19) Europäisches Patentamt
European Patent Office
Office européen des brevets

(11) EP 0 800 654 B1

(12) EUROPÄISCHE PATENTSCHRIFT

(45) Veröffentlichungstag und Bekanntmachung des Hinweises auf die Patenterteilung:
12.08.1998 Patentblatt 1998/33

(51) Int Cl.⁶: **G01S 13/93**, G01S 13/34, G08G 1/16

(21) Anmeldenummer: 96921896.5

(22) Anmeldetag: 05.07.1996

(86) Internationale Anmeldenummer:
PCT/DE96/01208

(87) Internationale Veröffentlichungsnummer:
WO 97/06449 (20.02.1997 Gazette 1997/09)

(54) **SCHALTUNGSANORDNUNG MIT EINEM RADARGERÄT ZUR ERMITTLUNG EINES ABSTANDES ODER EINER RELATIVGESCHWINDIGKEIT**

CIRCUITRY WITH RADAR EQUIPMENT FOR DETERMINING A DISTANCE OR RELATIVE SPEED

CIRCUITS POURVUS D'UN APPAREIL RADAR POUR DETERMINER UNE DISTANCE OU UNE VITESSE RELATIVE

(84) Benannte Vertragsstaaten:
DE FR GB IT

(30) Priorität: 08.08.1995 DE 19529180

(43) Veröffentlichungstag der Anmeldung:
15.10.1997 Patentblatt 1997/42

(73) Patentinhaber: SIEMENS AKTIENGESELLSCHAFT
80333 München (DE)

(72) Erfinder: HÖSS, Alfred
D-93105 Tegernheim (DE)

(56) Entgegenhaltungen:
WO-A-95/14939        WO-A-95/20169
US-A- 5 420 792

• PATENT ABSTRACTS OF JAPAN vol. 018, no. 281 (P-1744), 27.Mai 1994 & JP 06 051057 A (FUJITSU TEN LTD), 25.Februar 1994,

**Beschreibung**

Die Erfindung betrifft eine Schaltungsanordnung mit einem Radargerät zur Ermittlung eines Abstandes oder einer Relativgeschwindigkeit gemäß dem Oberbegriff des Anspruchs 1.

Schaltungsanordnungen mit einem Radargerät zur Ermittlung eines Abstandes oder einer Relativgeschwindigkeit werden in Fahrzeugen verwendet, um den Fahrer auf gefährliche Situationen aufmerksam zu machen oder um in die Steuerung von Funktionen des Fahrzeuges wie z.B. Bremsen, Motor oder Airbagauslösung automatisch einzugreifen.

Die Verkehrslage in den Städten mit Stop- and Go-Verkehr erfordert es, daß der Abstand zu einem vorausfahrenden Fahrzeug vor allem im Nahbereich, d.h. zwischen 0 und 10 Metern, schnell und genau gemessen wird, da besonders in diesem Bereich eine genaue Information über den Abstand notwendig ist.

Aus der Druckschrift PCT/DE 94/01382 ist bereits ein Radargerät bekannt, das ein kontinuierlich frequenzmoduliertes Radarsignal abstrahlt, wobei unterschiedliche Modulationsraten für den Nahbereich und den Fernbereich verwendet werden. Im Nahbereich zwischen 0 und 40 Metern wird mit einer großen Modulationsrate eine Unterdrückung von Spiegelfrequenzen erreicht. Der Fernbereich bis zu 400 Meter wird mit einer kleinen Modulationsrate vermessen.

Der Erfindung liegt die Aufgabe zugrunde, eine verbesserte Schaltungsanordnung zur Verfügung zu stellen, die an verschiedene Geschwindigkeiten des Fahrzeuges angepaßt ist.

Die Aufgabe wird mit den Merkmalen des Anspruchs 1 gelöst.

Ein wesentlicher Vorteil der Erfindung liegt darin, daß die Modulationsrate des Radargerätes an die Geschwindigkeit des Fahrzeuges angepaßt ist. Die Folge ist, daß die Reichweite und die Genauigkeit des Radargerätes auf die Geschwindigkeit des Fahrzeuges abgestimmt sind und somit eine genauere Information über den Abstand und die Relativgeschwindigkeit zur Verfügung steht.

Weitere vorteilhafte Ausbildungen und Verbesserungen sind in den Unteransprüchen beschrieben.

Das Radargerät sendet bei langsamen Geschwindigkeiten ein Radarsignal mit einer großen Modulationsrate aus. Dadurch wird eine große Entfernungsfrequenzverschiebung gegenüber der Dopplerfrequenz erzeugt. In vorteilhafter Weise wird durch die Verwendung von großen Modulationsraten eine genaue Ermittlung des Abstandes im Nahbereich zwischen 0 und 40 Metern in Abhängigkeit von einer einstellbaren ersten Geschwindigkeit erreicht. Die erste Geschwindigkeitsschwelle ist vorzugsweise auf 20 km/h eingestellt.

Besonders vorteilhaft ist es, bei Geschwindigkeiten, die über der ersten Geschwindigkeitsschwelle liegen, eine kleine Modulationsrate zu verwenden.

Zusätzlich zu einem Modulationszyklus mit einer großen Modulationsrate, die eine genaue Abstandsmessung ermöglicht, wird in einer Weiterbildung der Erfindung bei einer Geschwindigkeit, die größer als die erste Geschwindigkeitsschwelle ist, zusätzlich ein Modulationszyklus mit einer kleinen Modulationsrate durchgeführt, um den Fernbereich (bis zu 200 Metern) hinsichtlich Abstand und Relativgeschwindigkeit gegenüber Objekten, insbesondere gegenüber Fahrzeugen, zu vermessen.

Eine bevorzugte Ausführung der Schaltungsanordung beruht darin, daß das Radargerät aufeinanderfolgend abwechselnd einen Modulationszyklus mit einer großen Modulationsrate und einen Modulationszyklus mit einer kleinen Modulationsrate verwendet. Dadurch steht sowohl ein genauer Abstandswert für den Nahbereich als auch ein genauer Abstandswert für den Fernbereich zur Verfügung.

Die Erfindung wird anhand der Figuren näher erläutert; es zeigen:

Figur 1    ein Blockschaltbild einer Schaltungsanordnung gemäß der Erfindung,

Figur 2    eine erste Folge von Modulationszyklen, die von dem Radargerät ausgesendet werden,

Figur 3    eine zweite Folge von Modulationszyklen, die von dem Radargerät ausgesendet werden, und

Figur 4    ein Ablaufdiagramm eines Programms, das von der Schaltungsanordnung nach Figur 1 abgearbeitet wird.

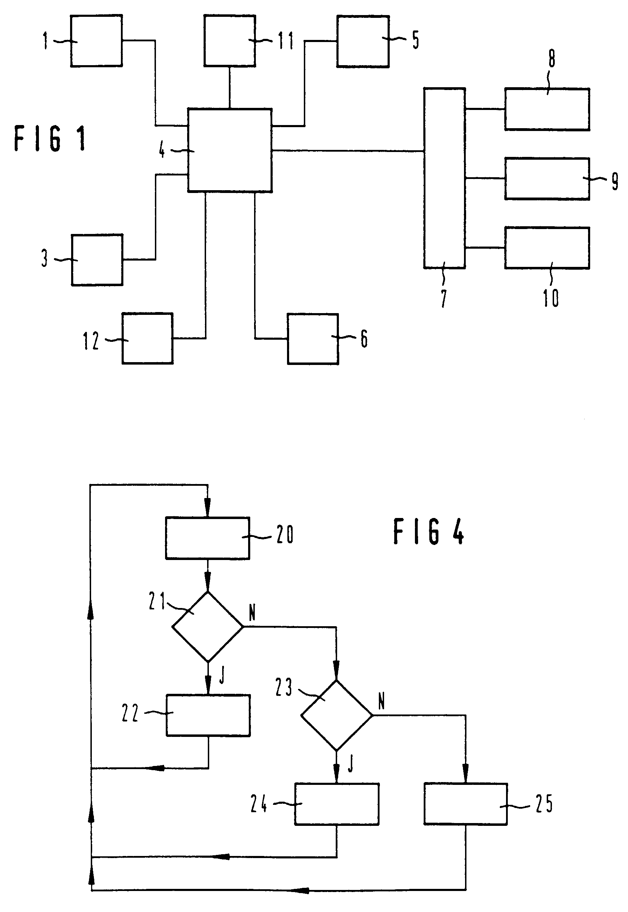

Figur 1 zeigt die erfindungsgemäße Schaltungsanordnung, die in einem Kraftfahrzeug angeordnet ist. Eine Recheneinheit 4 ist über Signalleitungen mit einem Radargerät 1 und mit einem Sensor 3 verbunden. Weiterhin steht die Recheneinheit 4 mit einem Speicher 11, mit einer Anzeige 5, mit einem Datenbus 7 und mit einer Schnittstelle 6 in Verbindung. An den Datenbus 7 sind ein Steuergerät 8 für ein Automatikgetriebe, ein Motorsteuergerät 9 und ein Steuergerät 10 für ein Bremssystem angeschlossen. Der Sensor 3 ist als Geschwindigkeitssensor ausgebildet, der die Geschwindigkeit des Fahrzeuges ermittelt. Das Radargerät 1 weist einen Sender und Empfänger für frequenzmodulierte Radarstrahlen auf.

Die Recheneinheit 4 ist weiterhin mit zusätzlichen Sensoren 12 über eine Signalleitung verbunden. Die zusätzlichen Sensoren 12 ermitteln Wetterverhältnisse wie: Regen, Schnee, Nebel, Sonnenschein, und Fahrbahnzustände wie: Nässe, Glätte, Fahrbahnunebenheiten und ob ein Blinkersignal gesetzt ist.

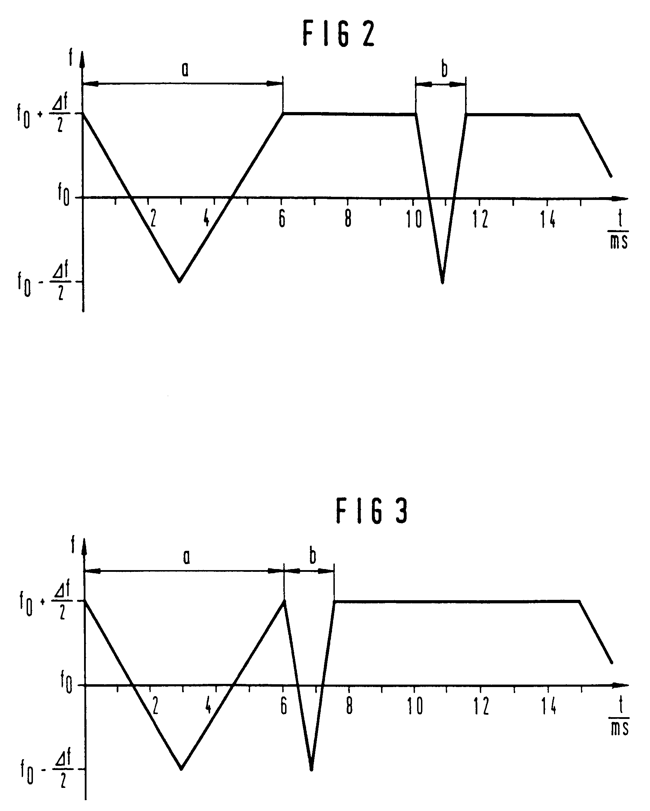

Figur 2 zeigt einen ersten Modulationszyklus a mit einer kleinen Modulationsrate und einen zweiten Modulationszyklus b mit einer großen Modulationsrate. Mit Modulationsrate ist die Änderung der Frequenz pro Zeiteinheit bezeichnet. In Figur 2 ist die Frequenz f gegen die Zeit t (Millisekunden) aufgetragen, wobei der Nullpunkt von einer Mittenfrequenz fo vorgegeben ist. In einem Modulationszyklus wird die Frequenz des frequenzmodulierten Dauerstrichradars von einer Maximalfrequenz ($f_0 + \frac{\Delta f}{2}$) mit einer ersten Modulationsrate zu einer minimalen Frequenz ($f_0 - \frac{\Delta f}{2}$) erniedrigt und anschließend mit der ersten Modulationsrate zu der maximalen Frequenz ($f_0 + \frac{\Delta f}{2}$) wieder erhöht. Dies erfolgt in Figur 2 in dem Zeitbereich zwischen 0 und 6 ms.

An den ersten Modulationszyklus a schließt sich eine Auswertezeit für den ersten Modulationszyklus an, in der die Radarstrahlen mit konstanter Frequenz abgestrahlt werden. Die Recheneinheit 4 berechnet in der Auswertezeit den Abstand und/oder die Relativgeschwindigkeit zwischen dem Fahrzeug und einem Objekt, insbesondere einem weiteren Fahrzeug, berechnet.

Bei dem zweiten Modulationszyklus b wird die Frequenz des abgestrahlten Radarsignals von der maximalen Frequenz ($f_0 + \frac{\Delta f}{2}$) mit einer zweiten Modulationsrate, die größer ist als die erste Modulationsrate ist, auf die minimale Frequenz ($f_0 - \frac{\Delta f}{2}$) erniedrigt und anschließend mit der zweiten Modulationsrate wieder auf die maximale Frequenz erhöht. Dies ist in Figur 2 in dem Zeitbereich zwischen 10 und 11,5 ms dargestellt. Anschließend erfolgt eine Auswertezeit für den zweiten Modulationszyklus, in der von der Recheneinheit 4 der Abstand und/oder die Relativgeschwindigkeit zu dem Objekt berechnet wird.

Bei dem Zeitpunkt t=15 ms erfolgt erneut ein erster Modulationszyklus a mit der ersten Modulationsrate. Nach einer entsprechenden Auswertezeit wird erneut ein zweiter Modulationszyklus b mit der zweiten Modulationsrate durchgeführt. Mit fo ist die Mittenfrequenz und mit Δf der Modulationshub bezeichnet.

Die Radarsignale werden von dem Radargerät 1 abgestrahlt, von einem Objekt, z.B. einem vorausfahrenden Fahrzeug, reflektiert und vom Radargerät wieder empfangen. Aus dem Vergleich der abgestrahlten Radarsignale mit den empfangenen Radarsignalen wird mit bekannten Methoden (PCT/DE 94/01382) der Abstand und die Geschwindigkeit zwischen dem eigenen Fahrzeug und dem Objekt von der Recheneinheit 4 bestimmt.

Figur 3 zeigt ein Verfahren, bei dem der erste Modulationszyklus und der zweite Modulationszyklus direkt hintereinander durchgeführt werden und anschließend eine Auswertezeit für den ersten und den zweiten Modulationszyklus folgt. Ab dem Zeitpunkt t=15 ms wird in Figur 3 erneut ein erster und ein zweiter Modulationszyklus mit einer sich daran anschließenden Auswertezeit durchgeführt.

Die Auswertung der Radarsignale wird folgendermaßen durchgeführt:
Aufgrund der Entfernung zum Objekt ergibt sich eine Frequenzverschiebung $F_d$ in dem reflektierten Radarsignal:

$$F_d = 2 \cdot R(\Delta f / c \cdot T),$$

wobei

mit  Δf der Frequenzhub,
mit  c die Lichtgeschwindigkeit,
mit  T die Dauer eines halben Modulationszyklus und
mit  R die Entfernung zum vorausfahrenden Fahrzeug bezeichnet ist.

Die Relativgeschwindigkeit zwischen dem Fahrzeug, in den das Radargerät eingebaut ist und dem Objekt führt in dem reflektierten Radarsignal zu einer Dopplerfrequenzverschiebung $F_v$:

$$F_v = 2 \cdot V_r(f_0 / c),$$

wobei

mit  $f_0$ = die Mittenfrequenz,
mit  $V_r$ = die Relativgeschwindigkeit bezeichnet ist.

Die Frequenzverschiebung aufgrund der Entfernung und die Dopplerfrequenzverschiebung aufgrund der Relativgeschwindigkeit führen zu zwei unterschiedlichen Zwischenfrequenzen, die davon abhängen, ob die Modulationsrate positiv oder negativ ist, d.h. ob die Frequenz erhöht oder erniedrigt wird. Bei einer Erhöhung der Frequenz, d.h. wenn das frequenzmodulierte Radarsignal in der Frequenz zunimmt, ergibt sich eine erste Zwischenfrequenz:

$$f_{zf1} = |f_d - f_v|.$$

Bei einer Erniedrigung der Frequenz, d.h. wenn das frequenzmodulierte Radarsignal in der Frequenz abnimmt, ergibt sich eine zweite Zwischenfrequenz $f_{zf2} = |f_d - f_v|$.

Bei der Auswertung der Zwischenfrequenzsignale werden schnelle Fourier-Transformationen berechnet. Das spektrale Abtastintervall bei der Berechnung der schnellen Fourier-Transformationen bestimmt das Auflösungsvermögen für den Abstand und die Relativgeschwindigkeit. Wird bei gleicher Modulationsrate eine größere Abtastfrequenz gewählt, so sind bei der Signalauswertung mehrere Abtastpunkte zu verarbeiten, so daß ein höherer Rechenaufwand notwendig ist.

Durch eine Erhöhung der Abtastfrequenz bleibt die Entfernungs- und die Geschwindigkeitsauflösung konstant, wobei jedoch der Meßbereich erweitert wird. Wird bei gleicher Abtastrate die Modulationsrate erhöht, so verringert sich der Bereich, in dem der Abstand ermittelbar ist. Eine Erhöhung der Modulationsrate um den Faktor 2 führt zu einer Halbierung des Bereiches, in dem der Abstand zum Objekt bestimmbar ist. Die Auflösung der Entfernung wird dagegen verbessert. Die Auflösung der Geschwindigkeit bleibt konstant.

Durch die Verwendung großer Modulationsraten, die beispielsweise größer als 250 MHz/ms sind, wird eine präzise Bestimmung des Abstandes zum Objekt, insbesondere zu einem Fahrzeug, im Nahbereich von 0 bis 40 Metern erreicht.

Die erste, kleine Modulationsrate beträgt beispielsweise 75 Mhz/ms, die zweite, große Modulationsrate beträgt beispielsweise 300 Mhz/ms, die Mittenfrequenz beträgt beispielsweise 76,5 Mhz und der Frequenzhub beträgt vorzugsweise 225 MHz.

Figur 4 zeigt schematisch ein Programm, das die Schaltungsanordnung der Figur 1 durchführt. Bei Programmpunkt 20 ermittelt die Recheneinheit 4 über den Sensor 3 die Geschwindigkeit des Fahrzeuges, in das das Radargerät eingebaut ist. Anschließend überprüft die Recheneinheit 4 bei Programmpunkt 21, ob die Geschwindigkeit des Fahrzeuges über der ersten vorgegebenen Geschwindigkeitsschwelle liegt. In diesem Ausführungsbeispiel ist die erste vorgegebene Geschwindigkeitsschwelle mit 20 km/h belegt. Ist die Geschwindigkeit kleiner als die erste vorgegebene Geschwindigkeitsschwelle, so wird bei Programmpunkt 22 das Radargerät 1 von der Recheneinheit 4 nach einem ersten Meßverfahren angesteuert. Das erste Meßverfahren beruht darin, daß nur Modulationszyklen mit einer großen Modulationsrate für die frequenzmodulierten Radarsignale durchgeführt werden, d.h. ein Radarsignal entsprechend dem zweiten Modulationszyklus b wird ausgesendet und empfangen. Optional werden auch erste Modulationszyklen a mit einer kleinen Modulationsrate vom Radargerät ausgesendet und empfangen.

Nach einer vorgegebenen Zeitspanne von einer Sekunde wird nach Programmpunkt 20 zurückverzweigt und das Programm erneut durchlaufen.

Ergibt die Abfrage bei Programmpunkt 21, daß die Geschwindigkeit des Fahrzeuges über der ersten vorgegebenen Geschwindigkeitsschwelle liegt, so erfolgt bei Programmpunkt 23 eine zweite Abfrage, bei der überprüft wird, ob die Geschwindigkeit des Fahrzeuges über einer zweiten, vorgegebenen Geschwindigkeitsschwelle liegt. Die zweite vorgegebene Geschwindigkeitsschwelle ist in diesem Ausführungsbeispiel auf 60 km/h festgelegt. Ergibt sich bei der zweiten Abfrage bei Programmpunkt 23, daß die Geschwindigkeit des Fahrzeuges über der zweiten vorgegebenen Geschwindigkeitsschwelle liegt, so steuert die Recheneinheit 4 bei Programmpunkt 24 das Radargerät 1 nach einem zweiten Meßverfahren. Das zweite Meßverfahren beruht darin, daß die Radarsignale nur in Form der ersten Modulationszyklen a mit einer kleinen Modulationsrate vom Radargerät ausgesendet und empfangen werden.

Nach einer vorgegebenen Zeitspanne von einer Sekunde wird nach Programmpunkt 20 zurückverzweigt und das Programm erneut durchlaufen.

Ergibt die zweite Abfrage bei Programmpunkt 23, daß die Geschwindigkeit des Fahrzeuges kleiner als die vorgegebene zweite Geschwindigkeitsschwelle und größer als die erste vorgegebene Geschwindigkeitsschwelle ist, so wird bei Programmpunkt 25 das Radargerät 1 nach einem dritten Meßverfahren von der Recheneinheit 4 angesteuert. Das dritte Meßverfahren beruht darin, daß das Radargerät 1 Radarsignale abwechselnd in Form des ersten Modulationszyklus a mit einer ersten, kleinen Modulationsrate und in Form des zweiten Modulationszykluses b mit einer zweiten, großen Modulationsrate aussendet.

Anstelle der verwendeten Geschwindigkeitsschwellen, bei denen zwischen einer kleinen und einer großen Modulationsrate umgeschaltet wird, wird in einer besonderen Ausführung der Erfindung die Modulationsrate kontinuierlich an die Geschwindigkeit des Fahrzeuges in der Weise angepaßt, daß mit abnehmender Geschwindigkeit die Modulationsrate vergrößert wird. Die Modulationsrate wird dabei entsprechend den vorgegebenen Geschwindigkeiten von 20 km/h und 60 km/h und den entsprechenden Modulationsraten von 75 Mhz/ms und 300 MHz/ms geeignet für die Geschwindigkeit des Fahrzeuges interpoliert. Die Interpolation wird abhängig von fahrdynamischen Gesichtspunkten z.B. linear oder hyperbolisch durchgeführt. Im Normalfall wird linear interpoliert.

Ergibt die Auswertung der reflektierten Radarsignale, daß der Abstand oder die Relativgeschwindigkeit zum Objekt kleiner bzw. größer als ein vorgegebener Abstand oder eine vorgegebene Relativgeschwindigkeit sind, so gibt die Recheneinheit ein Warnsignal über die Anzeige 5 an den Fahrer weiter und greift vorzugsweise in das Automatikgetriebe 8, das Motorsteuergerät 9 oder das Bremssystem 10 ein, um einen eventuellen Unfall zu verhindern oder um den Abstand zum vorausfahrenden Fahrzeug zu vergrößern. Vorzugsweise wird auch ein Airbagsteuergerät angesteuert.

Die Abstände und die relativen Geschwindigkeiten, bei denen eine Anzeige oder ein Eingriff erfolgt, sind von Umgebungsbedingungen wie dem Wetter oder dem Fahrbahnzustand abhängig. Das in Figur 4 dargestellte schematische Programm ist im Speicher 11 abgelegt. Die vorgegebenen Geschwindigkeitsschwellen, die relativen Geschwindigkeiten und der Abstand, bei denen eine Warnung oder ein Eingriff vorgenommen wird, sind über die Schnittstelle 6 veränderbar.

Die Schnittstelle 6 ist beispielsweise in Form einer Ein- und Ausgabeeinheit ausgebildet, mit der die momentanen Werte für die Geschwindigkeitsschwellen, die relativen Geschwindigkeiten und der Abstand abrufbar und über eine Tastatur veränderbar sind.

## Patentansprüche

1. Schaltungsanordnung mit einem Radargerät zur Ermittlung eines Abstandes oder einer Relativgeschwindigkeit zwischen einem Fahrzeug, in dem die Schaltungsanordnung angeordnet ist, und einem Objekt, insbesondere einem weiteren Fahrzeug, wobei das Radargerät ein frequenzmoduliertes Radarsignal abgibt, ein reflektiertes Radarsignal empfängt und aus einem Vergleich des abgestrahlten Radarsignals mit dem empfangenen Radarsignal den Abstand oder die Relativgeschwindigkeit ermittelt,
**dadurch gekennzeichnet,**

- daß von einem am Fahrzeug angeordneten Geschwindigkeitssensor die Geschwindigkeit des Fahrzeuges gemessen wird,
- daß von dem Radargerät (1) die Frequenz des Radarsignals mit einer Modulationsrate geändert wird, die von der Geschwindigkeit des Fahrzeuges abhängt und mit abnehmender Geschwindigkeit des Fahrzeuges ansteigt.

2. Schaltungsanordnung nach Anspruch 1,
**dadurch gekennzeichnet, daß** von dem Radargerät (1) die Frequenz des Radarsignals mit einer ersten, großen Modulationsrate geändert wird, wenn die Geschwindigkeit des Fahrzeuges kleiner als eine erste vorgegebene Geschwindigkeitsschwelle ist.

3. Schaltungsanordnung nach Anspruch 2,
**dadurch gekennzeichnet, daß** von dem Radargerät (1) die Frequenz des Radarsignals mit einer zweiten Modulationsrate geändert wird, die kleiner als die erste Modulationsrate ist, wenn die Geschwindigkeit des Fahrzeuges größer als die erste vorgegebene Geschwindigkeitsschwelle ist.

4. Schaltungsanordnung nach Anspruch 3,
**dadurch gekennzeichnet, daß** von dem Radargerät (1) ein zweiter Modulationszyklus (b) mit der zweiten Modulationsrate und ein erster Modulationszyklus (a) mit der ersten Modulationsrate ausgesendet wird, wenn die Geschwindigkeit des Fahrzeuges größer als die erste vorgegebene Geschwindigkeitsschwelle und kleiner als eine vorgegebene zweite Geschwindigkeitsschwelle ist, und daß die zweite vorgegebene Geschwindigkeitsschwelle größer als die erste vorgegebene Geschwindigkeitsschwelle ist.

5. Schaltungsanordnung nach Anspruch 4,
**dadurch gekennzeichnet, daß** von dem Radargerät (1) abwechselnd ein erster Modulationszyklus und ein zweiter Modulationszyklus ausgestrahlt wird.

6. Schaltungsanordnung nach Anspruch 2,
**dadurch gekennzeichnet, daß** von dem Radargerät (1) ein erster und ein zweiter Modulationszyklus ausgesendet wird.

**Claims**

1. Circuit arrangement having a radar equipment for determining a distance or a relative speed between a vehicle, in which the circuit arrangement is arranged, and an object, in particular another vehicle, the radar equipment emitting a frequency-modulated radar signal, receiving a reflected radar signal and determining the distance or the relative speed from a comparison of the emitted radar signal with the received radar signal,
characterized

- in that the speed of the vehicle is measured by a speed sensor which is arranged on the vehicle,
- in that the frequency of the radar signal is varied by the radar equipment (1) at a modulation rate which depends on the speed of the vehicle and rises as the speed of the vehicle reduces.

2. Circuit arrangement according to Claim 1, characterized in that the frequency of the radar signal is varied by the radar equipment (1) at a first, high modulation rate when the speed of the vehicle is less than a first predetermined speed threshold.

3. Circuit arrangement according to Claim 2, characterized in that the frequency of the radar signal is varied by the radar equipment (1) at a second modulation rate, which is less than the first modulation rate, when the speed of the vehicle is greater than the first predetermined speed threshold.

4. Circuit arrangement according to Claim 3, characterized in that a second modulation cycle (b) is transmitted by the radar equipment (1) at the second modulation rate and a first modulation cycle (a) is transmitted at the first modulation rate when the speed of the vehicle is greater than the first predetermined speed threshold and less than a predetermined second speed threshold, and in that the second predetermined speed threshold is greater than the first predetermined speed threshold.

5. Circuit arrangement according to Claim 4, characterized in that a first modulation cycle and a second modulation cycle are transmitted alternately by the radar equipment (1).

6. Circuit arrangement according to Claim 2, characterized in that a first and a second modulation cycle are transmitted by the radar equipment (1).

**Revendications**

1. Agencement de circuit comportant un dispositif radar servant à relever une distance ou une vitesse relative entre un véhicule, dans lequel l'agencement de circuit est disposé, et un objet, notamment un autre véhicule, le dispositif radar délivrant un signal radar modulé en fréquence, recevant un signal radar réfléchi et déterminant la distance ou la vitesse relative au moyen d'une comparaison du signal radar émis avec le signal radar reçu, caractérisé

- en ce que la vitesse du véhicule est mesurée par un capteur de vitesse disposé sur le véhicule,
- en ce que la fréquence du signal radar est modifiée par le dispositif radar (1) à un taux de modulation qui dépend de la vitesse du véhicule et augmente lorsque la vitesse du véhicule diminue.

2. Agencement de circuit suivant la revendication 1, caractérisé en ce que la fréquence du signal radar est modifiée par le dispositif radar (1) à un premier taux de modulation, élevé, lorsque la vitesse du véhicule est inférieure à un premier seuil de vitesse préfixé.

3. Agencement de circuit suivant la revendication 2, caractérisé en ce que la fréquence du signal radar est modifiée par le dispositif radar (1) à un second taux de modulation qui est inférieur au premier taux de modulation lorsque la vitesse du véhicule est supérieure au premier seuil de vitesse préfixé.

4. Agencement de circuit suivant la rotation 3, caractérisé en ce qu'un second cycle de modulation (b) est émis par le dispositif radar (1) au second taux de modulation, et un premier cycle de modulation (a) au premier taux de modulation, lorsque la vitesse du véhicule est supérieure au premier seuil de vitesse préfixé et inférieure au second seuil de vitesse préfixé et en ce que le second seuil de vitesse préfixé est supérieur au premier seuil de vitesse préfixé.

5. Agencement de circuit suivant la revendication 4, caractérisé en ce qu'un premier cycle de modulation et un second cycle de modulation sont émis d'une manière alternée par le dispositif radar (1).

6. Agencement de circuit suivant la revendication 2, caractérisé en ce qu'un premier et un second cycles de modulation sont émis par le dispositif radar (1).

FIG 1

FIG 4

# FIG 2

# FIG 3